# EUROPÄISCHE PATENTANMELDUNG

(11) **EP 1 346 805 A2**
(43) Veröffentlichungstag der Anmeldung: **24.09.2003**
(21) Anmeldenummer: 03005720.2
(22) Anmeldetag: 13.03.2003
(51) Int. Cl.: B27D 5/00, B65G 1/06

(54) **Kantenmagazin sowie Vorrichtung zur Lagerung von Kantenmagazinen**

(30) Priorität: 18.03.2002 DE 20204285 U
(71) Anmelder: PAUL OTT GmbH, 4650 Lambach/OÖ (AT)
(72) Erfinder: Hans Kaser, 4671 Aichkirchen (AT); Ing. Gerhard Pittrich, 4702 Wallern an der Trattnach (AT)
(74) Vertreter: Hano, Christian, Dipl.-Ing.

(57) **Zusammenfassung**

Das Kantenmagazin (20) umfasst eine Grundplatte (21), die einen Kantenrollenauflagebereich (29) aufweist, der von einer Kantenbegrenzung (24) begrenzt wird, die eine Kantenauslassöffnung (34) bildet, wobei angrenzend an die Kantenauslassöffnung (34) eine Kantenführungseinrichtung (35)) vorgesehen ist, die mehrere nacheinander angeordnete Paare von Führungsrollen (36, 37, 38, 39) zur Führung einer Kante (22) und eine Kantenklemmvorrichtung (28) zum Halten der Kante (22) in einer definierten Position umfasst. Das Kantenmagazin ist für eine Vorrichtung geeignet , die ein Gestell (12) umfasst, in dem mehrere Trageinrichtungen (19) im Abstand übereinander angeordnet sind, auf denen jeweils ein im wesentlichen plattenförmiges Kantenmagazin (20) horizontal abgelegt werden kann. An einer vertikalen Seite des Gestells (12) ist eine Handhabungsvorrichtung (30) angeordnet, die einen Rahmen (32) aufweist, der vertikal längs des Gestells (12) geführt und durch einen Antrieb (41) verfahrbar ist, wobei an dem Rahmen (32) eine Aufnahmeeinrichtung (33) gelagert ist. Die Aufnahmeeinrichtung (33), ist zur Aufnahme eines Kantenmagazins (20) durch einen Linearantrieb (51) aus einer Ausgangsstellung außerhalb des Gestells (12) in eine Aufnahmestellung in dem Gestell (12) linear und horizontal verfahrbar, zusammen mit dem Linearantrieb (51) durch eine am Rahmen (32) gelagerte Schwenkeinrichtung (61) um eine vertikale Achse (60) aus der Ausgangsstellung in eine Schwenkstellung verschwenkbar, und durch den Linearantrieb (51) aus der Schwenkstellung in eine Ladestellung zum Laden eines Kantenmagazins (20) in eine Kantenleimmaschine (70) linear und horizontal verfahrbar.

## Beschreibung

Die Erfindung betrifft ein Kantenmagazin, auf dem jeweils eine Kantenrolle angeordnet ist, wobei die Kante zur Anleimung in einer Kantenanleimmaschine verwendet wird, sowie eine Vorrichtung zu dessen Lagerung.

Es ist bekannt, an industriellen Kantenleimmaschinen Mehrfachmagazine anzuordnen, auf denen Kantenrollen vertikal angeordnet sind. Diese vertikale Anordnung bedingt, dass die Kante zur Beleimung in der Kantenleimmaschine um 90° gedreht werden muss. Dies ist insbesondere bei Starkfunierkanten aufgrund der erhöhten Bruchgefahr nachteilig. Kanten mit größeren Abmessungen sind wegen ihrer zunehmenden Steifigkeit nur bedingt automatisiert verarbeitbar wenn sie in vertikal angeordneten Magazinen gelagert sind. Darüber hinaus sind die Magazine während der Produktion der Maschine nicht zugänglich. Dies bedingt einen erhöhten Rüstaufwand, da die Mehrfachmagazine bei Stillstand der Kantenleimmaschine möglichst komplett gerüstet werden müssen. Schließlich erschwert die fehlende Zugänglichkeit während der Maschinenproduktion eine Einbindung in die Logistik der Kantenleimmaschine für eine flexible Produktion.

Der Erfindung liegt die Aufgabe zugrunde, mit konstruktiv einfachen Mitteln ein Kantenmagazin sowie eine Vorrichtung zur Lagerung mehrerer dieser Kantenmagazine zu schaffen, die sowohl eine zuverlässige Einführung einer Kante in eine Kantenleimmaschine gewährleisten als auch eine flexible Nachrüstung von Kanten während der Produktion der Kantenleimmaschine ermöglicht.

Diese Aufgabe wird erfindungsgemäß durch eine Vorrichtung mit den Merkmalen des Patentanspruchs 1 sowie durch ein Kantenmagazin mit den Merkmalen des Patentanspruchs 5 gelöst. Vorteilhafte Ausgestaltungen der erfindungsgemäßen Vorrichtung sind Gegenstand der Patentansprüche 2 bis 4. Das erfindungsgemäße Kantenmagazin wird durch die Merkmale der Patentansprüche 6 bis 8 vorteilhaft weitergebildet.

Bei der erfindungsgemäßen Vorrichtung werden die erfindungsgemäßen Kantenmagazine und somit die Kantenrollen waagerecht übereinander in Etagen gelagert. Dies ermöglicht es, die Kante verarbeitungsgerecht ohne Verdrehung in die Kantenanleimmaschine einzuführen. Wenn an der Kantenleimmaschine eine andere Kante benötigt wird als diejenige, die zur Zeit im Einsatz ist, kann der Kantenwechsel automatisch mittels der Handhabungseinrichtung ausgeführt werden. Wenn die Handhabungseinrichtung von einer Steuereinrichtung gesteuert wird, die mit einer Steuereinrichtung der Kantenleimmaschine in Verbindung steht, ist eine Einbindung der erfindungsgemäßen Vorrichtung in eine Auftragslogistik zur Erreichung eines hohen Automatisierungsgrades möglich. Schließlich ermöglicht die erfindungsgemäße Vorrichtung auch eine flexible Einlagerung der erfindungsgemäßen Kantenmagazinen bei laufender Kantenleimmaschine.

Eine Ausführungsform der Erfindung wird nachstehend anhand von Zeichnungen näher erläutert. Es zeigen:
Fig. 1 eine schematische Seitenansicht einer Vorrichtung zur Lagerung von Kantenmagazinen,
Fig. 2 eine Draufsicht von Fig. 1, wobei sich eine Aufnahmeeinrichtung einer Handhabungseinrichtung in ihrer Ausgangsstellung befindet,
Fig. 3 die Ansicht von Fig. 2, wobei sich die Aufnahmeeinrichtung in einer Schwenkstellung befindet, sowie die Anordnung eines Kantenmagazins in einer Kantenleimmaschine,
Fig. 4 eine Draufsicht auf ein Kantenmagazin, und
Fig. 5 den Wechsel eines Kantenmagazins bei der Vorrichtung von Fig. 1.

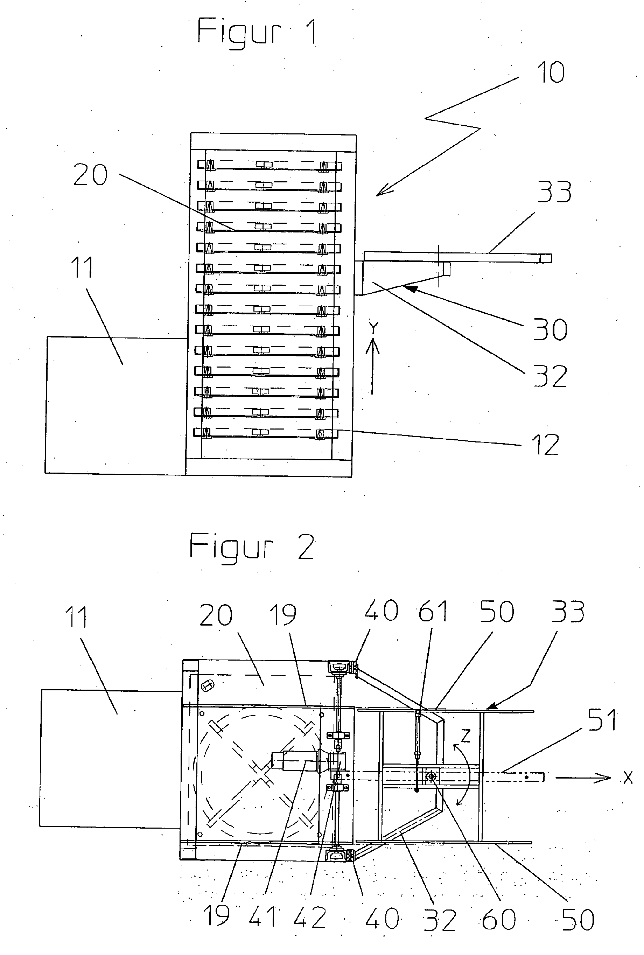

Die in Fig. 1 gezeigte Vorrichtung 10 zur Lagerung von Kantenmagazinen 20 weist ein turmförmiges Gestell 12 mit rechteckigem Querschnitt auf, in dem mehrere Kantenmagazine 20 übereinander im Abstand gelagert sind, wobei die Kantenmagazine 20 auf parallel im Abstand angeordneten Tragstreben 19 abgelegt sind. Auf der in Fig. 1 rechten Seite des Gestells 12 ist eine Handhabungseinrichtung 30 vorgesehen, die einen Rahmen 32 aufweist, der in vertikaler Richtung an dem Gestell 12 verfahrbar geführt ist. Auf der der Handhabungseinrichtung 30 gegenüberliegenden Seite des Gestells 12 ist ein Einlagerungstisch 11 angeordnet.

Wie in Fig. 2 zu erkennen ist, ist der Rahmen 32 in Linearführungen 40 in vertikaler Richtung exakt geführt. Der Rahmen 32 wird von einem Antrieb 41 angetrieben, der im unteren Bereich des Gestells 12 angeordnet ist und über ein Getriebe 42 und einen Riemenantrieb (nicht gezeigt) den Rahmen 32 in der Höhe positionieren kann.

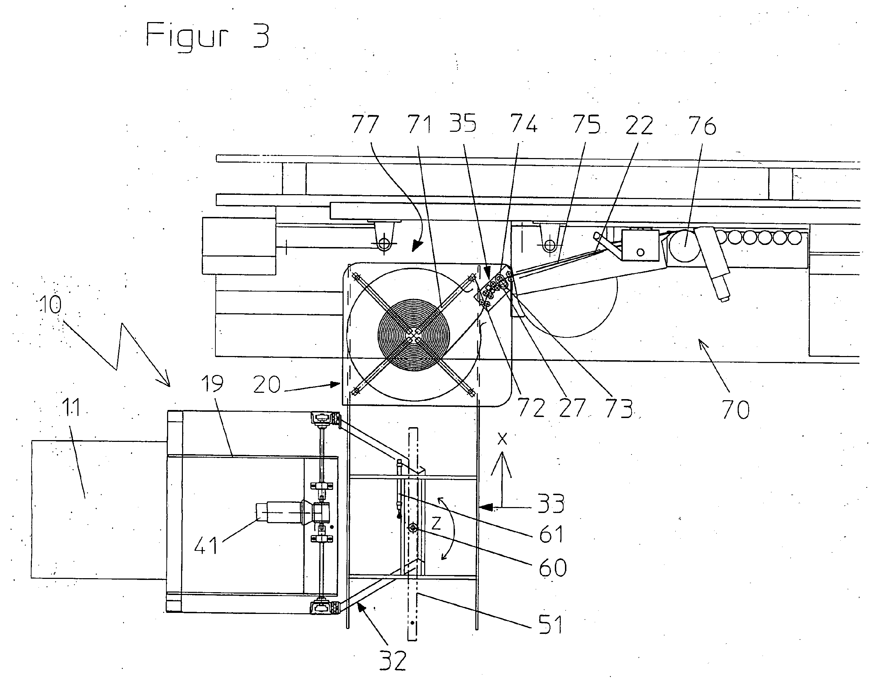

Auf dem Rahmen 32 ist eine ebene Aufnahmeeinrichtung 33 mit zwei im Abstand zueinander angeordneten Auflagestäben 50 linear verschiebbar und und um eine vertikale Achse 60 verschwenkbar angeordnet, die sich in der in Fig. 2 gezeigten Ausgangsstellung außerhalb des Gestells 12 befindet. Die Aufnahmeeinrichtung 33 ist über einen Linearantrieb 51 aus der Ausgangsstellung von Fig. 2 in eine Aufnahmestellung linear bewegbar, in der sie sich zur Aufnahme eines Kantenmagazins 20 innerhalb des Gestells 12 befindet, wobei die beiden Auflagestäbe 50 in der Aufnahmestellung zwischen den Tragstreben 19 angeordnet sind. Die Aufnahmeeinrichtung 33 ist zusammen mit dem Linearantrieb 51 um die vertikale Achse 60 verschwenkbar an dem Rahmen 32 gelagert, wie dies durch den Pfeil Z angedeutet ist. Zur Verschwenkung ist ein Schwenkzylinder 61 mit einem Ende an dem Rahmen 32 und mit seinem anderen Ende an der Aufnahmeeinrichtung 33 gelagert. Durch Betätigung des Schwenkzylinders 61 kann die Aufnahmeeinrichtung 33 aus der in Fig. 2 gezeigten Ausgangsstellung in die in Fig. 3 gezeigte Schwenkstellung um 90° verschwenkt werden. Anschließend kann die Aufnahmeeinrichtung 33 aus der Schwenkstellung durch den Linearantrieb 51 linear in Richtung einer Aufnahmeeinrichtung 77 an einer Kantenleimmaschine 70 bewegt werden, um dort ein Kantenmagazin 20 abzulegen. Diese Linearbewegung ist in Fig. 3 durch den Pfeil X angedeutet.

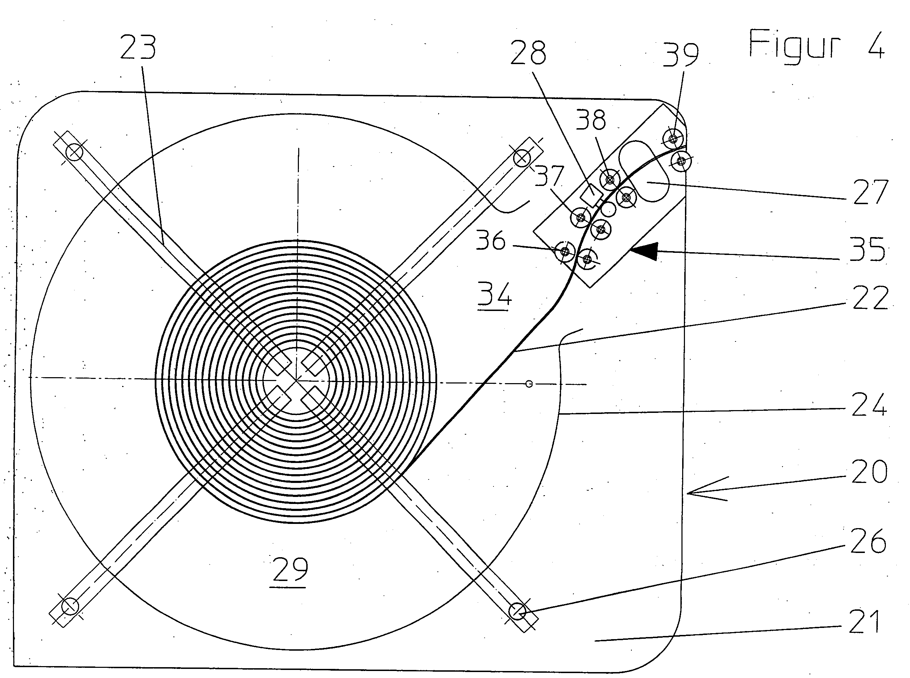

Wie es in Fig. 4 gezeigt ist, umfasst jedes Kantenmagazin 20 eine im Wesentlichen rechteckige Grundplatte 21. Auf der Grundplatte 21 ist eine Kantenbegrenzung 24 im Wesentlichen kreisförmig angeordnet. Die Kantenbegrenzung 24 umgibt einen Kantenrollenauflagebereich 29, in dem eine Kantenrolle 22 zentral auf der Grundplatte 21 aufliegt. Die Kantenbegrenzung 24 ist zur Bildung einer Auslassöffnung 34 in der Nähe des Eckbereichs der Grundplatte 21 unterbrochen, der sich in Fig. 4 rechts oben befindet . An die Auslassöffnung 34 grenzt in diesem Eckbereich nach außen eine Kantenführungseinrichtung 35 an. Die Kantenführungseinrichtung 35 weist vier Führungsrollenpaare 36, 37, 38, 39 auf, die in Führungsrichtung der Kante 22 hintereinander angeordnet sind. Auf der Kantenführungseinrichtung 35 ist darüber hinaus zwischen dem zweiten Führungsrollenpaar 37 und dem dritten Führungsrollenpaar 38 eine Klemmvorrichtung 28 angeordnet, die die Kante 22 in einer genau definierten Position festklemmt, beispielsweise wenn das freie Ende der Kante 22 an den in Fig. 4 rechten Seitenrand der Grundplatte 21 angrenzt, wie es in Fig. 4 gezeigt ist. Zwischen dem dritten Führungsrollenpaar 38 und dem vierten Führungsrollenpaar 39 ist in der Grundplatte 21 und der Kantenführungseinrichtung 35 eine Durchgangsöffnung 27 vorgesehen.

In der Grundplatte 21 sind außerdem vier Durchgangsschlitze 23 vorgesehen, die sich angrenzend an das Zentrum des Auflagebereichs 29 in einem Winkelabstand von 90° radial nach außen bis zur Kantenbegrenzung 24 erstrecken. Angrenzend an das jeweilige äußere Ende der Durchgangsschlitze 23 ist jeweils eine Zentrierhülse 26 zur Zentrierung der Grundplatte 21 in der Kantenleimmaschine 70 ausgebildet.

Wie es in Fig. 3 gezeigt ist, wird das Kantenmagazin 20 durch die Handhabungseinrichtung 30 in der Kantenleimmaschine 70 angeordnet. Damit das Kantenmagazin 20 exakt an der Aufnahmeeinrichtung 77 der Kantenleimmaschine 70 aufgesetzt werden kann, wird die Grundplatte 21 mit den Zentrierhülsen 26 auf entsprechende Aufnahmekegel 72 an der Kantenleimmaschine 70 aufgesetzt. In dieser Stellung ist das Kantenmagazin 20 so positioniert, dass ein an der Kantenleimmaschine 70 vorgesehenes Rollenkreuz 71 sich durch die Durchgangsschlitze 23 erstreckt, so dass die Kante 22 beim Verarbeiten abrollen kann.

Wenn das Kantenmagazin 20 in der Kantenleimmaschine 70 positioniert ist, erstreckt sich außerdem ein aus einer Vorschubwalze 73 und einer Klemmwalze 74 bestehendes Walzenpaar durch die Durchgangsöffnung 27. Zwischen der Vorschubwalze 73 und der Klemmwalze 74 wird die Kante 22 angeordnet. Der Vorschub der Kante erfolgt in der Kantenleimmaschine 70 über die gummierte Vorschubwalze 73, die von einem Motor angetrieben ist. Die Klemmwalze 74 drückt dabei die Kante 22 an die Vorschubwalze 73. Das freie Ende der Kante 22 ist auf dem Kantenmagazins 20 so angeordnet, dass die Kante 22 einem Förderkanal 75 zugewandt ist, der die Kante 22 zu einer angetriebenen Druckrolle 76 in der Kantenleimmaschine 70 führt.

Ein Kantenmagazin 20 wird durch die Handhabungseinrichtung 30 waagerecht aus dem Gestell 12 entnommen und ebenso waagerecht in der Kantenleimmaschine 70 eingesetzt, so dass die Kante 22 nicht verdreht wird.

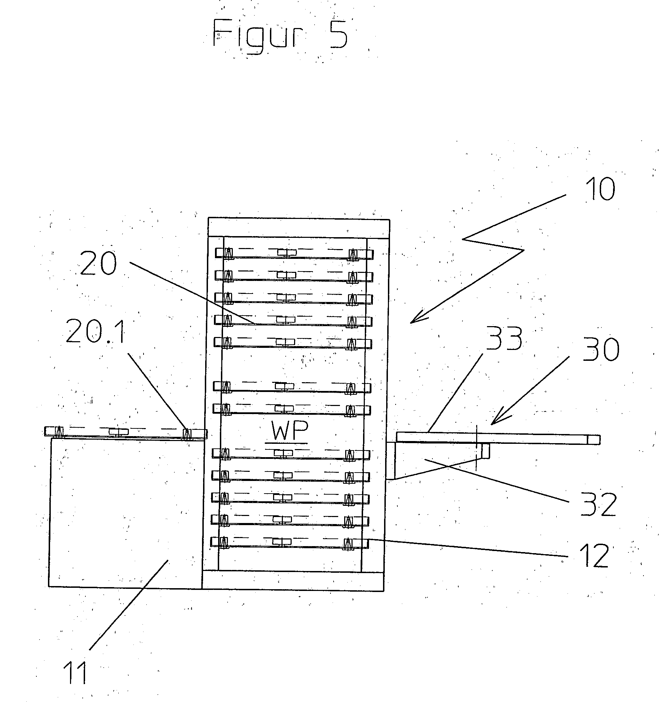

Wie es in Fig. 5 angedeutet ist, wird zur Einlagerung einer Kantenrolle 22 in die Vorrichtung 10 zunächst ein leeres Kantenmagazin 20.1 von einer Bedienungsperson aus einer Wechselplatzposition WP des Gestells 10 manuell herausgezogen und auf der Auflagefläche des Einlagerungstisch 11 abgelegt, die sich auf Höhe der Wechselplatzposition befindet. Anschließend wird eine neue Kantenrolle 22 von der Bedienungsperson auf dem leeren Kantenmagazin 20.1 abgelegt. Dann schiebt die Bedienungsperson das bestückte Kantenmagazin 20.1 in das Gestell 12 ein. Dabei werden von der Bedienungsperson alle Kanteninformationen, die die Kantenleimmaschine 70 braucht, eingegeben.

Von der Wechselplatzposition WP im Gestell 12 wird nun das Kantenmagazin 20 von der Handhabungseinrichtung 30 herausgezogen und nach oben oder nach unten gefahren und an der richtigen Stelle eingelagert. Die Einlagerung geschieht normalerweise automatisch. Da die Steuereinrichtung der Vorrichtung 10 mit der Steuereinrichtung der Kantenleimmaschine 70 verbunden ist, weiß die Steuerungseinrichtung der Vorrichtung 10 welche Aufträge als nächstes bearbeitet werden, bzw. welche Kante 22 demnächst gebraucht wird. Dementsprechend wird der Bedienungsperson vorgeschlagen, welche Kante sie einzulegen hat.

Zur Beschickung der Kantenleimmaschine 70 mit einem gewünschten Kantenmagazin 20 wird die Handhabungseinrichtung 30 in vertikaler Richtung zu der Position verfahren, in der sich das gewünschte Kantenmagazin 20 in dem Gestell 12 befindet. Dann wird die Aufnahmeeinrichtung 33 linear durch den Linearantrieb 51 in das Gestell 12 verfahren und nimmt das entsprechende Kantenmagazin 20 auf. Anschließend wird die Aufnahmeeinrichtung 33 wieder in die Ausgangsstellung verfahren, die in Fig. 2 gezeigt ist. Daraufhin wird die Aufnahmerichtung um 90° durch den Schwenkzylinder 61 um die vertikale Achse 60 verschwenkt. Anschließend wird die Aufnahmeeinrichtung 33 zusammen mit dem Kantenmagazin 20 durch den Linearantrieb 51 linear zur Aufnahmeeinrichtung 77 in der Kantenleimmaschine 70 verfahren, auf der das Kantenmagazin 20 abgelegt wird.

Wenn das Kantenmagazin 20 in der Aufnahmeeinrichtung 77 der Kantenleimmaschine 70 liegt, wird der Anfang der Kante 22 mit Hilfe der Kantenvorschubwalze 73 und der Klemmwalze 74 zum Förderkanal 75 der Kantenleimmaschine 70 geführt. Anschließend an den Förderkanal 75 wird die Kante 22 mit Hilfe der angetriebenen Druckrolle 76 an das zu bekantende Plattenmaterial geleimt.

Für einen Kantenwechsel an der Kantenleimmaschine 70 wird die Kante 22 mit Hilfe der Kantenvorschubwalze 73 und der Klemmwalze 74 soweit zurückgezogen, bis sie die in Fig. 4 dargestellte Position erreicht, in der das freie Ende der Kante 22 bündig mit dem Seitenrand der Grundplatte 21 liegt. Dann wird das Kantenmagazin 20 aus der Aufnahmeeinrichtung 77 an der Kantenleimmaschine 70 gehoben und die Aufnahmeeinrichtung 33 durch den linearen Antrieb 51 in die Schwenkstellung zurückgefahren. Anschließend wird die Aufnahmeeinrichtung 33 durch die Schwenkeinrichtung um 90° um die vertikale Achse gedreht. Dann wird die Aufnahmeeinrichtung 33 zur Einlagerung des Kantenmagazins 22 durch den Linearantrieb 51 in das Gestell 12 verfahren. Sobald das Kantenmagazin 20 im Gestell 12 abgelegt ist, kann die Handhabungseinrichtung 30 ein neues Käntenmagazin 20 aus dem Gestell 12 holen.

## Patentansprüche

1. Vorrichtung zur Lagerung von Kantenmagazinen (20), auf denen jeweils eine Kantenrolle (22) angeordnet ist,
- mit einem Gestell (12), in dem mehrere Trageinrichtungen (19) im Abstand übereinander angeordnet sind, auf denen jeweils ein im wesentlichen plattenförmiges Kantenmagazin (20) horizontal abgelegt werden kann, und
- mit einer an einer vertikalen Seite des Gestells (12) angeordneten Handhabungsvorrichtung (30), die einen Rahmen (32) aufweist, der vertikal längs des Gestells (12) geführt und durch einen Antrieb (41) verfahrbar ist, wobei an dem Rahmen (32) eine Aufnahmeeinrichtung (33) gelagert ist, die
* zur Aufnahme eines Kantenmagazins (20) durch einen Linearantrieb (51) aus einer Ausgangsstellung außerhalb des Gestells (12) in eine Aufnahmestellung in dem Gestell (12) linear und horizontal verfahrbar ist,
* zusammen mit dem Linearantrieb (51) durch eine am Rahmen (32) gelagerte Schwenkeinrichtung (61) um eine vertikale Achse (60) aus der Ausgangsstellung in eine Schwenkstellung verschwenkbar ist, und
* durch den Linearantrieb (51) aus der Schwenkstellung in eine Ladestellung zum Laden eines Kantenmagazins (20) in eine Kantenleimmaschine (70) linear und horizontal verfahrbar ist, wobei
- die Kantenmagazine (20) jeweils eine Grundplatte (21) umfassen, die einen Kantenrollenauflagebereich (29) aufweist, der von einer Kantenbegrenzung (24) begrenzt wird, die eine Kantenauslassöffnung (34) bildet, wobei angrenzend an die Kantenauslassöffnung (34) eine Kantenführungseinrichtung (35)) vorgesehen ist, die mehrere nacheinander angeordnete Paare von Führungsrollen (36, 37, 38, 39) zur Führung einer Kante (22) und eine Kantenklemmvorrichtung (28) zum Halten der Kante (22) in einer definierten Position umfasst.

2. Vorrichtung nach Anspruch 1, **dadurch gekennzeichnet, dass** eine Trageinrichtung (19) zur Bildung einer Wechselplatztrageinrichtung (WP) auf einer der Handhabungseinrichtung (30) entgegengesetzten Einlagerungsseite des Gestells (12) manuell zugänglich ist.

3. Vorrichtung nach Anspruch 2, **dadurch gekennzeichnet, dass** auf der Einlagerungsseite ein Einlagerungstisch (11) angeordnet ist, der auf im wesentlichen der Höhe der Wechselplatztrageinrichtung (WP) eine Auflagefläche aufweist.

4. Vorrichtung nach einem der vorhergehenden Ansprüche, **dadurch gekennzeichnet, dass** die Handhabungseinrichtung (30) von einer Steuereinrichtung gesteuert wird, die mit der Steuereinrichtung der Kantenleimmaschine (70) in Verbindung steht.

5. Kantenmagazin (20), das eine Grundplatte (21) umfasst, die einen Kantenrollenauflagebereich (29) aufweist, der von einer Kantenbegrenzung (24) begrenzt wird, die eine Kantenauslassöffnung (34) bildet, wobei angrenzend an die Kantenauslassöffnung (34) eine Kantenführungseinrichtung (35)) vorgesehen ist, die mehrere nacheinander angeordnete Paare von Führungsrollen (36, 37, 38, 39) zur Führung einer Kante (22) und eine Kantenklemmvorrichtung (28) zum Halten der Kante (22) in einer definierten Position umfasst.

6. Kantenmagazin nach Anspruch 5, **dadurch gekennzeichnet, dass** in der Grundplatte (21) Durchgangsschlitze (23) zur Aufnahme eines Rollenkreuzes (71) der Kantenleimmaschine (70) ausgebildet sind, die sich angrenzend an das Zentrum des Auflagebereichs (29) radial nach außen erstrecken.

7. Kantenmagazin nach Anspruch 5 oder 6, **dadurch gekennzeichnet, dass** an der Unterseite der Grundplatte (21) Zentriereinrichtungen (26) vorgesehen sind.

8. Kantenmagazin nach einem der Ansprüche 5 bis 7, **dadurch gekennzeichnet, dass** in der Grundplatte (21) im Bereich der Kantenführungseinrichtung (35) eine Durchgangsöffnung (27) ausgebildet ist, durch die sich eine an einer Kantenleimmaschine (70) angeordnete Kantenvorschubeinrichtung ((73, 74) erstrecken kann.
